# EUROPEAN PATENT APPLICATION

(11) **EP 4 810 778 A1**
(43) Date of publication of application: **23.09.2026**
(21) Application number: 26160715.4
(22) Date of filing: 25.02.2026
(51) Int. Cl.: F02C 3/34

(54) **SYSTEM AND METHOD FOR SEPARATION AND USE OF OXYGEN FROM FLUE GAS**

(30) Priority: 20.03.2025 US 202519084876
(71) Applicant: GE Vernova Technology GmbH, 5400 Baden (CH)
(72) Inventor: RAMESH, Anantha, 560066 Bengaluru (IN); UMMITI, Muneeswara Babu, 560066 Bengaluru (IN); MANDAPAKA, Suresh Venkata Jogi Janaki, 560066 Bengaluru (IN); NAGUMANTRI, Raman Venkata Satya Lova, 560066 Bengaluru (IN); TILLERY, Steven William, Greer, 29651 (US)
(74) Representative: Openshaw & Co.

(57) **Abstract**

The disclosure provides a system and method for separation and use of oxygen from flue gas, e.g., from a gas turbine (GT) engine (100). A system according to the disclosure includes an oxygen separator(128) downstream from a gas turbine (GT) engine. The oxygen separator is configured to separate a flue gas from the GT engine into an oxygen rich stream and an oxygen reduced stream. A first conduit (130) is coupled to the oxygen separator and configured to transmit the separated oxygen rich stream to a power plant component (136).

## Description

### TECHNICAL FIELD

The subject matter disclosed herein relates to gas turbine (GT) engines included in power plant systems. More particularly, the subject matter disclosed herein relates to systems and methods for processing of flue gas and/or inlet air in GT engines. Even more in particular, the herein claimed invention relates to the subject matter set forth in the appended claims.

### BACKGROUND

In one type of a power-generating plant, a gas turbine (GT) engine can be used in conjunction with a generator to generate power. In a GT engine, a compressor with rows of rotating blades and stationary vanes compresses air and directs it to a combustor that mixes the compressed air with fuel. In the combustor, the compressed air and fuel are burned to form combustion products (i.e., a hot air-fuel mixture), which are expanded through blades in a turbine (e.g., an expansion turbine). The exhaust gases from the turbine section may be expelled through a stack (as in a simple cycle power plant) or may be directed to a heat recovery steam generator (as in a combined cycle power plant), where the residual heat is used to produce steam to drive a steam turbine.

GT engine processes yield various outputs including combusted flue gas. Flue gas in conventional GT engines is treated in a flue gas stack to remove any hazardous species before other non-hazardous outputs are transmitted to an ambient environment. Many power plants with GT engines implement carbon capture technology, specifically post combustion carbon capture and storage (CCS) systems. Such systems extract a portion of the flue gas from the GT engine and use any of a variety of gas separation tools to remove carbon dioxide from the flue gas to trap and store the carbon dioxide without it being released to the ambient environment. A variety of technical parameters, including the presence of certain non-carbon dioxide species in a flue gas stream, can affect the performance of the CCSs. Similar parameters of inlet air to the GT engine, particularly the composition of air from ambient environments, also may affect the performance of the CCSs.

### BRIEF DESCRIPTION

The herein claimed invention resides in the subject matter set forth in the claims.

All aspects, examples and features mentioned below can be combined in any technically possible way. The reference numerals included in the brief description are provided in accordance with the accompanying Figures and should not be considered as limiting of the one or more embodiments of the present disclosure.

An aspect of the disclosure provides a system including an oxygen separator downstream from a gas turbine (GT) engine, the oxygen separator configured to separate a flue gas stream from the GT engine into an oxygen rich stream and an oxygen reduced stream; and a first conduit coupled to the oxygen separator and configured to transmit the separated oxygen rich stream to a power plant component. The first conduit coupled to the oxygen separator and configured to transmit the separated oxygen rich stream to a power plant component shall in the context of the present document in particular be construed such that the first conduit is in fluid communication with the oxygen separator and the power plant component, which, in turn, will be understood to be any power plant component other than the oxygen separator. Further, it will be appreciated that the first conduit in particular establishes a fluid communication between the oxygen separator and the power plant component.

Another aspect of the disclosure includes any of the preceding aspects and/or any of the appended claims, and a carbon capture system (CCS) in fluid communication with the oxygen separator and configured to receive the oxygen reduced stream therefrom.

Another aspect of the disclosure includes any of the preceding aspects and/or any of the appended claims, and the CCS includes an amine-based carbon capture system for removing carbon dioxide from the oxygen reduced stream.

Another aspect of the disclosure includes any of the preceding aspects and/or any of the appended claims, and the power plant component includes an exhaust gas recirculation (EGR) system fluidly coupled to the GT engine.

Another aspect of the disclosure includes any of the preceding aspects and/or any of the appended claims, and the first conduit transmits the oxygen rich stream to the EGR system upstream from an exhaust gas heat exchanger and downstream of an inlet port to the EGR system.

Another aspect of the disclosure includes any of the preceding aspects and/or any of the appended claims, and the first conduit transmits the oxygen rich stream to the EGR system upstream from an output port from the EGR system and downstream from an exhaust gas heat exchanger.

Another aspect of the disclosure includes any of the preceding aspects and/or any of the appended claims, and the power plant component includes a duct burner of a heat recovery steam generator (HRSG).

Another aspect of the disclosure includes any of the preceding aspects and/or any of the appended claims, and a second conduit configured to direct the flue gas stream from the GT engine to the oxygen separator, wherein the second conduit is coupled downstream of the HRSG and upstream of a flue gas-stack.

Another aspect of the present disclosure provides a system including: a heat recovery steam generator (HRSG) fluidly coupled to a GT engine and configured to receive a flue gas stream therefrom, wherein the HRSG transmits the flue gas stream to a flue-gas-stack; an oxygen separator coupled downstream of the HRSG and configured to separate a portion of the flue gas stream into an oxygen rich stream and an oxygen reduced stream; a first conduit coupled to the oxygen separator and configured to transmit the oxygen rich stream to a power plant component; and carbon capture system (CCS) in fluid communication with the oxygen separator and configured to receive the remaining oxygen reduced stream therefrom.

Another aspect of the disclosure includes any of the preceding aspects and/or any of the appended claims, and the CCS includes an amine-based carbon capture system for removing carbon dioxide from the oxygen reduced stream.

Another aspect of the disclosure includes any of the preceding aspects and/or any of the appended claims, and the component of the power plant includes an exhaust gas recirculation (EGR) system fluidly coupled to the GT engine.

Another aspect of the disclosure includes any of the preceding aspects and/or any of the appended claims, and the first conduit transmits the oxygen rich stream to the EGR system upstream from an exhaust gas heat exchanger and downstream of an inlet port to the EGR system.

Another aspect of the disclosure includes any of the preceding aspects and/or any of the appended claims, and the first conduit transmits the oxygen rich stream to the EGR system upstream from an output port from the EGR system and downstream from an exhaust gas heat exchanger.

Another aspect of the disclosure includes any of the preceding aspects and/or any of the appended claims, and the system includes a duct burner of a heat recovery steam generator (HRSG).

Another aspect of the disclosure includes any of the preceding aspects and/or any of the appended claims, and a second conduit configured to direct the flue gas stream from the HRSG to the oxygen separator, wherein the second conduit is coupled downstream of the HRSG and upstream of a flue gas-stack.

An aspect of the present disclosure provides a method including: separating, in an oxygen separator, a flue gas stream from a gas turbine (GT) engine into an oxygen rich stream and an oxygen reduced stream; and transmitting the oxygen rich stream to a power plant component. As noted above, it will be understood that said mentioned power plant component is any power plant component other than the oxygen separator.

Another aspect of the disclosure includes any of the preceding aspects and/or any of the appended claims, and transmitting the oxygen reduced stream to carbon capture system (CCS) in fluid communication with the oxygen separator, wherein the CCS includes an amine-based carbon capture system for removing carbon dioxide from the oxygen reduced stream.

Another aspect of the disclosure includes any of the preceding aspects, and the power plant component includes an exhaust gas recirculation (EGR) system fluidly coupled to the GT engine.

Another aspect of the disclosure includes any of the preceding aspects and/or any of the appended claims, and transmitting the oxygen rich stream to the EGR system includes, based on, or dependent on, a temperature of the oxygen rich stream, transmitting the oxygen rich stream to a first position upstream from an exhaust gas heat exchanger and downstream of an inlet port of the EGR system, or to a second position upstream from an output port from the EGR system and downstream from an exhaust gas heat exchanger of the EGR system.

Another aspect of the disclosure includes any of the preceding aspects, and the power plant component includes a duct burner of a heat recovery steam generator (HRSG) operatively associated with the GT engine.

Another aspect of the disclosure provides a system including: a nitrogen separator coupled to an ambient environment and configured to separate the ambient air into a nitrogen rich stream and a remaining nitrogen reduced stream; and a first conduit coupled to the nitrogen separator and configured to transmit the nitrogen reduced stream to an inlet of a GT engine.

Another aspect of the disclosure includes any of the preceding aspects and/or any of the appended claims, and the first conduit is coupled to the inlet of the GT engine upstream from a mixing inlet from an exhaust gas recirculation (EGR) system.

Another aspect of the disclosure includes any of the preceding aspects and/or any of the appended claims, and the nitrogen separator is further configured to return the nitrogen rich stream to the ambient environment.

Another aspect of the disclosure includes any of the preceding aspects and/or any of the appended claims, and a nitrogen conduit coupled to the nitrogen separator and configured to transmit the nitrogen rich stream to a component of the GT engine fluidly isolated from the inlet.

Another aspect of the disclosure includes any of the preceding aspects and/or any of the appended claims, and a nitrogen rich purge gas supply.

Another aspect of the disclosure provides a system including: a first conduit configured to extract a flue gas from a gas turbine (GT) engine; a separator system coupled to the first conduit and including a nitrogen separator configured to separate the flue gas into a nitrogen rich stream and a nitrogen reduced stream; and a second conduit coupled to the nitrogen separator and configured to transmit the nitrogen rich stream to one of a nitrogen supply or an ambient environment.

Another aspect of the disclosure includes any of the preceding aspects and/or any of the appended claims, and a carbon capture system (CCS) in fluid communication with the separation system and configured to receive the nitrogen reduced stream therefrom.

Another aspect of the disclosure includes any of the preceding aspects and/or any of the appended claims, and the CCS includes an amine-based carbon capture system for removing carbon dioxide from the nitrogen reduced stream.

Another aspect of the disclosure includes any of the preceding aspects and/or any of the appended claims, and the nitrogen supply is fluidly isolated from an inlet to the GT engine.

Another aspect of the disclosure includes any of the preceding aspects and/or any of the appended claims, and the separation system further includes an oxygen separator configured to separate an oxygen rich stream from the flue gas and transmit the oxygen rich stream to a power plant component, wherein the oxygen separator transmits an oxygen reduced remainder of the flue gas to the nitrogen separator.

Another aspect of the disclosure includes any of the preceding aspects and/or any of the appended claims, and the power plant component includes an exhaust gas recirculation (EGR) system fluidly coupled to the GT engine.

Another aspect of the disclosure includes any of the preceding aspects and/or any of the appended claims, and the power plant component includes a duct burner of a heat recovery steam generator (HRSG).

Another aspect of the disclosure includes any of the preceding aspects and/or any of the appended claims, and the oxygen rich stream is fluidly isolated from the nitrogen rich stream.

Another aspect of the disclosure provides a method including: separating, in a nitrogen separator of a separation assembly, a flue gas from a gas turbine (GT) engine into a nitrogen rich stream and a remaining nitrogen reduced stream; and transmitting the separated nitrogen rich stream to one of a nitrogen supply or an ambient environment.

Another aspect of the disclosure includes any of the preceding aspects and/or any of the appended claims, and transmitting the remaining nitrogen reduced stream to a carbon capture system (CCS) in fluid communication with the separation assembly.

Another aspect of the disclosure includes any of the preceding aspects and/or any of the appended claims, and the CCS includes an amine-based carbon capture system for removing carbon dioxide from the remaining flue gas.

Another aspect of the disclosure includes any of the preceding aspects and/or any of the appended claims, and separating, in an oxygen separator of the separation assembly, an oxygen rich stream from the flue gas; transmitting the oxygen rich stream to a power plant component; and transmitting an oxygen reduced remainder of the flue gas to the nitrogen separator.

Another aspect of the disclosure includes any of the preceding aspects and/or any of the appended claims, and the oxygen rich stream is fluidly isolated from the nitrogen rich stream.

Another aspect of the disclosure includes any of the preceding aspects and/or any of the appended claims, and the power plant component includes an exhaust gas recirculation (EGR) system fluidly coupled to the GT engine.

Another aspect of the disclosure includes any of the preceding aspects and/or any of the appended claims, and wherein the power plant component includes a duct burner of a heat recovery steam generator (HRSG).

Two or more aspects described in this disclosure, including those described in this summary section, may be combined to form implementations not specifically described herein.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a cross-sectional view of a conventional gas turbine (GT) engine;
FIG. 2 shows an expanded cross-sectional view of a turbine section of a conventional GT engine;
FIG. 3 shows a schematic diagram of a system for separation and use of oxygen from a flue gas according to embodiments of the disclosure;
FIG. 4 shows a schematic diagram of a system for separation of oxygen from a flue gas and transmission to an exhaust gas recirculation (EGR) system according to embodiments of the disclosure;
FIG. 5 shows a schematic diagram of a system for separation of oxygen from flue gas and transmission to a heat recovery steam generator (HRSG) according to embodiments of the disclosure;
FIG. 6 shows a schematic diagram of a system for separation and use of nitrogen from an ambient air according to embodiments of the disclosure;
FIG. 7 shows a schematic diagram of a system for separation and use of nitrogen from a flue gas according to embodiments of the disclosure;
FIGS. 8-10 show schematic diagrams of systems with a separation assembly for separating nitrogen and oxygen from a flue gas according to various embodiments of the disclosure; and
FIG. 11 shows a schematic diagram of a controller interacting with a system with a separation assembly for separating nitrogen and oxygen from a flue gas according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the current technology, it will become necessary to select certain terminology when referring to and describing relevant machine components within a turbomachine. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. As used herein, "downstream" and "upstream" are terms that indicate a direction relative to the flow of a fluid, such as the working fluid through the gas turbine engine or, for example, the flow of air through the combustor or coolant through one of the turbine's component systems. The term "downstream" corresponds to the direction of flow of the fluid, and the term "upstream" refers to the direction opposite to the flow. The terms "forward" and "aft," without any further specificity, refer to directions, with "forward" referring to the front or compressor end of the engine, and "aft" referring to the rearward or turbine end of the engine.

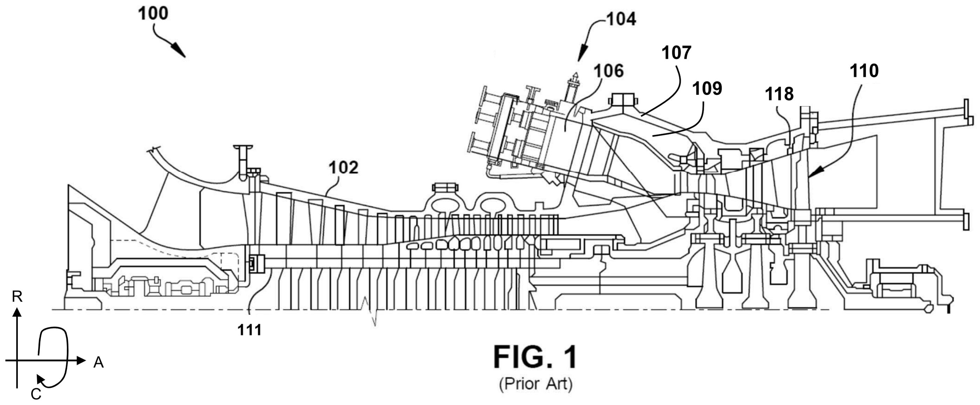

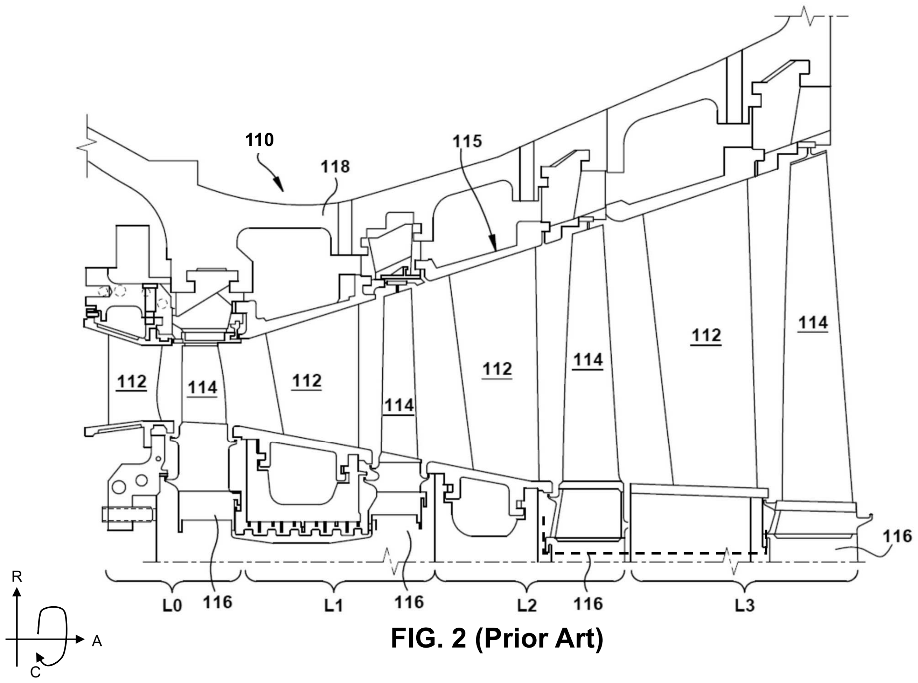

It is often required to describe parts that are disposed at different radial positions with regard to a center axis. The term "radial" refers to movement or position perpendicular to an axis. For example, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. The term "axial" refers to movement or position parallel to an axis. Finally, the term "circumferential" refers to movement or position around an axis. It will be appreciated that such terms may be applied in relation to the center axis of the turbine, as shown in the legend of FIGS. 1 and 2.

In addition, several descriptive terms may be used regularly herein, as described below. The terms "first", "second", and "third" may be used interchangeably to distinguish one component from another and are not intended to signify location or importance of the individual components.

The terminology used herein is for the purpose of describing particular embodiments only and is not intended to be limiting of the disclosure. As used herein, the singular forms "a", "an", and "the" are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur and that the description includes instances where the event occurs and instances where it does not.

Where an element or layer is referred to as being "on," "engaged to," "connected to," or "coupled to" another element or layer, it may be directly on, engaged to, connected to, or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The disclosure provides a system and method for separation and use of oxygen from flue gas, e.g., from a gas turbine (GT) engine. A system according to the disclosure includes an oxygen separator downstream from a gas turbine (GT) engine. The oxygen separator is configured to separate a flue gas from the GT engine into an oxygen rich stream and an oxygen reduced stream. A first conduit is coupled to the oxygen separator and configured to transmit the separated oxygen rich stream to a component of the GT engine.

The disclosure also provides a system and method for separation and use of nitrogen from inlet air or flue gas, e.g., in a gas turbine (GT) engine. A system according to the disclosure includes a nitrogen separator coupled to an ambient environment and configured to separate the ambient air into a nitrogen rich stream and a nitrogen reduced stream. A first conduit is coupled to the nitrogen separator and configured to transmit the nitrogen reduced stream to an inlet of a GT engine. The nitrogen separator alternately can remove nitrogen from a flue gas.

Referring to the drawings, FIG. 1 is a cross-sectional view of an illustrative machine including a turbomachine(s) to which teachings of the disclosure can be applied. In FIG. 1, a turbomachine in the form of a combustion turbine or gas turbine (GT) engine 100 (hereinafter, "GT engine 100") is shown. GT engine 100 includes a compressor 102 and one or more combustors 104 disposed with a compressor discharge casing 107, which defines a plenum 109 that receives compressed air from compressor 102. Fuel nozzle(s) within combustor 104 supply fuel and air to a combustion chamber 106 to produce high temperature and high pressure combustion gases. GT engine 100 also includes a turbine assembly 110 (i.e., an expansion turbine or turbine section) and a common compressor/turbine shaft 111 (hereinafter referred to as "rotor 111").

GT engine 100 may be, for example, a 7HA.03 engine, commercially available from GE Vernova, Cambridge, MA, USA. The present disclosure is not limited to any one type of GT engine and may be implemented in connection with other engines including, for example, the other HA, F, B, LM, GT, TM and E-class engine models of GE Vernova and engine models of other companies. More importantly, the teachings of the disclosure are not necessarily applicable to only a turbine assembly in a GT engine and may be applied to practically any type of industrial machine or other turbine, e.g., jet engines, turbofans, turbochargers, etc., that employ combustion gases. Hence, references to GT engine 100 and, specifically, to turbine assembly 110 of GT engine 100, are merely for description purposes and are not limiting.

FIG. 2 shows a cross-sectional view of an illustrative portion of turbine assembly 110. In the example shown, turbine assembly 110 includes four stages L0-L3 that may be used with GT engine 100 in FIG. 1. The four stages are referred to as L0, L1, L2, and L3. Stage L0 is the first stage and is the smallest (in a radial direction) of the four stages. Stage L1 is the second stage and is disposed adjacent the first stage L0 in an axial direction. Stage L2 is the third stage and is disposed adjacent the second stage L1 in an axial direction. Stage L3 is the fourth, last stage and is the largest (in a radial direction). It is to be understood that four stages are shown as one example only, and each turbine may have more or less than four stages. Stages L0-L3 together may define a hot gas path (HGP) through turbine assembly 110, portions of which are indicated via dashed conduits.

A plurality of stationary turbine vanes or nozzles 112 (hereafter "nozzle 112" or "nozzles 112") may cooperate with a plurality of rotating turbine blades 114 (hereafter "blade 114" or "blades 114") to form each stage L0-L3 of turbine assembly 110 and to define a portion of a working fluid path (i.e., the hot gas path) through turbine assembly 110. Each stage 115 includes a plurality of nozzles 112 and a plurality of blades 114. Blades 114 in each stage 115 are coupled to rotor 111 (FIG. 1), e.g., by a respective rotor wheel 116 that couples them circumferentially to rotor 111 (FIG. 1). That is, blades 114 are mechanically coupled in a circumferentially spaced manner to rotor 111, e.g., by rotor wheels 116. Turbine assembly 110 includes a plurality of nozzles 112 mounted to a casing 118 and circumferentially spaced around rotor 111 (FIG. 1). It is recognized that blades 114 rotate with rotor 111 (FIG. 1) and thus experience centrifugal force, while nozzles 112 are static. Compressor 102 may feature a similar arrangement of blades and nozzles, but the path of working fluid through compressor 102 may progress from a larger cross-sectional area to a smaller cross-sectional area (i.e., it may be the opposite of turbine assembly 110).

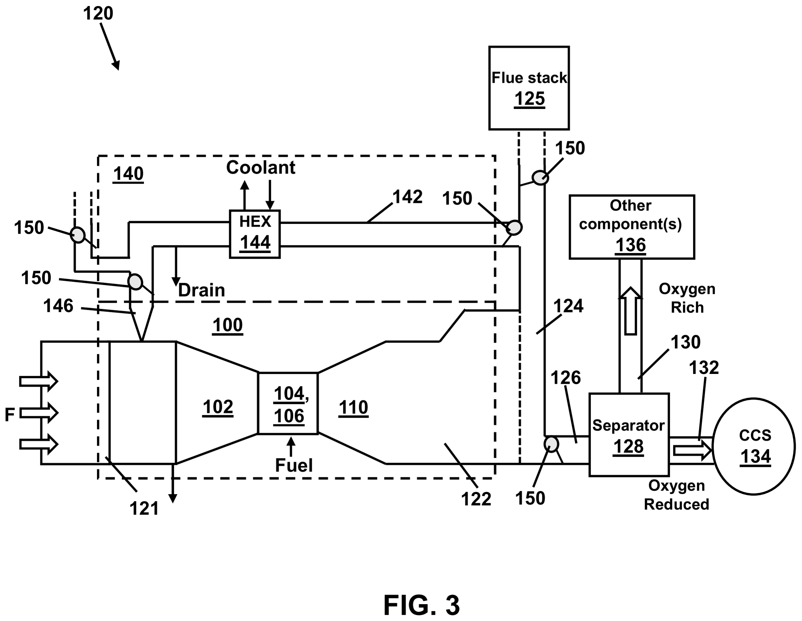

With reference to FIGS. 1 and 2, in operation, air flows through compressor 102 and increases in pressure and temperature, and the pressurized, heated air is supplied to combustor 104 via the compressor discharge casing 109. Specifically, the pressurized air is supplied to a head end section that is integral to combustor 104 and that includes one or more fuel nozzles. The fuel nozzle(s) are in flow communication with combustion chamber 106. The fuel nozzle(s) are also in flow communication with a fuel source (not shown in FIG. 1) and channel fuel and air to combustion chamber 106. Combustor 104 ignites and combusts fuel in the combustion chamber 106 to produce high-temperature combustion gases. Combustor 104 is in flow communication with turbine assembly 110, within which thermal energy from the combustion gas stream is converted to mechanical rotational energy by directing the combusted fuel (e.g., working fluid) into the working fluid path to turn blades 114. Turbine assembly 110 is rotatably coupled to and drives rotor 111. Compressor 102 may also be rotatably coupled to rotor 111. At least one end of rotor 111 may extend axially away from compressor 102 or turbine assembly 110 and may be attached to a load or machinery, such as, but not limited to components not shown, e.g., a generator, a load compressor, and/or another turbine. Schematic depictions of GT engine 100 in FIGS. 3-11 herein omit certain components (e.g., casing 107, plenum 109, rotor 111, nozzles 112, blades 114, wheels 116, etc.) solely for ease of illustration.

FIG. 3 depicts a schematic view of a power plant 120 for separation and use of oxygen from a flue gas according to embodiments of the disclosure. Power plant 120 interacts with GT engine 100 and other systems coupled thereto to pre-process portions of flue gas that are expelled from power plant 120 or routed to post combustion carbon capture (CCS) systems or components. During operation, a working fluid F, e.g., air, enters GT engine 100 at an inlet 121 thereto. Working fluid F may include air provided from an ambient environment and/or a dedicated supply of air and/or other fluids. Air inlet 121 may receive working fluid F and other fluids intermixed therewith (e.g., from an exhaust gas recirculation system as discussed herein) before they pass into compressor 102. Compressor 102 may include a plurality of stages of stator vanes (shown in FIG. 1) and rotating blades (FIG. 1) positioned within compressor 102. The stator vanes and rotating blades positioned within compressor 102 may be configured to aid in moving and/or passing of fluid through compressor 102.

As previously described, compressor 102 delivers a flow of compressed fluid (e.g., compressed air) to one or more combustors 104 (e.g., a single annular combustor or a plurality of combustion cans, as shown) via compressor discharge casing 107 (FIG. 1). Combustor 104 mixes the flow of compressed fluid with a pressurized flow of fuel provided by fuel nozzle(s) and ignites the mixture within the combustion chamber 106 to create a flow of combustion gas. The flow of combustion gas is in turn delivered to turbine assembly 110, which as discussed typically includes a plurality of stages of stationary nozzles (also known as "vanes") 112 (FIG. 2) and turbine blades 114 (FIG. 2). The flow of combustion gas through HGP (FIG. 2) of turbine assembly 110 causes rotor 111 (FIG. 1) to rotate and produce mechanical work. The mechanical work produced in turbine assembly 110 drives compressor 102 via rotor 111 and may be used to drive a generator (not shown) configured to generate power. The generator may be electrically coupled to electrical infrastructure for delivering power to customers, e.g., various transmission conduits (not shown) via electrical substations, distribution conduits, etc.

Turbine assembly 110 also may be fluidly coupled to a heat recovery steam generator (HRSG) 122 defining a passage for hot gases to flow therethrough. The passage may include various water-transmitting conduits (not shown) in thermal communication with the hot gases. Thermal interaction between the hot gases and the conduits converts water within the conduits into steam as generally known in the art. Steam from the HRSG 122 may be supplied to a steam turbine (not shown) as part of a combined cycle power generation system.

Upon exiting HRSG 122, the combusted flue gas may enter a flue conduit 124 connected to a flue-gas stack ("flue stack") 125. Flue stack 125 may be a chimney, conduit, and/or any other structural pathway for releasing combusted flue gases to an ambient environment. Various subsystems and/or components for removing contaminants and/or other materials from flue gases may be upstream of flue stack 125, but such components are generally well understood and independent of the embodiments discussed herein.

In power plant 120, a portion of flue gases in flue conduit 124 my pass to a separator inlet 126 to an oxygen separator (alternatively "separator") 128. Separator inlet 126 may located on an exhaust frame of power plant 120, and optionally, may include one or more conduits, fluid pathways, etc., for directing and/or metering of flue gases drawn from flue conduit 124. Separator inlet 126 and separator 128 in any case may be located between turbine assembly 110 (e.g., by being downstream from HRSG 122) and flue stack 125, such that flue gases entering separator inlet 126 have already interacted with turbine assembly 110. In addition thereto, flue gases entering separator inlet 126 have already exchanged thermal energy in HRSG 122. The amount of oxygen transmitted to oxygen separator 128 may depend in part on the size of separator inlet 126 relative to flue conduit 124, but the flow rate of flue gas(es) into separator inlet 126 may be controlled by other components in various implementations discussed herein.

Oxygen separator 128 may be any currently known or later developed fluid treatment tool configured to separate flue gas(es) into at least two components: an oxygen rich stream and an oxygen reduced stream. Oxygen separator 128 may be any tool and/or assembly operable for removing of oxygen and/or other gases from flue gas in flue conduit 124, or from other gaseous flows in power plant 120. Oxygen separator 128, as examples, may include a membrane-based oxygen separator, a pressure swing adsorption (PSA) system, a chemical absorption process, and/or any other currently known or later developed instrument for selectively removing oxygen compounds from flue gas without otherwise affecting the composition of flue gas(es). The oxygen gas separated from the flue gas(es) may pass through a separated gas conduit 130 to one or more other components 136 of GT engine 100 (e.g., HRSG 122, exhaust gas recirculation (EGR) system 140, etc., simply "other component(s) 136" hereafter) for a variety of purposes discussed herein.

The term "oxygen rich stream," as used herein, refers to any stream exiting oxygen separator 128 having a greater percent mass or volume composition of oxygen than the stream(s) entering oxygen separator 128. For instance, where flue gas(es) in flue conduit 124 are approximately eight percent oxygen, the oxygen rich stream leaving oxygen separator 128 may have more than an eight percent mass or volume composition of oxygen. The percentage of oxygen in an oxygen rich stream may be substantially greater than that of flue gas(es) in flue conduit 124, e.g., it may be at least approximately ninety percent oxygen by mass or volume. The term "oxygen reduced stream." As used herein, refers to any stream exiting oxygen separator 128 having a lower percent mass or volume composition of oxygen than the stream(s) entering oxygen separator 128. In the previous example where flue gase(es) in flue conduit 124 are approximately eight percent oxygen by mass or by volume, an oxygen reduced stream leaving oxygen separator 128 may have a mass or volume concentration of oxygen below eight percent.

The terms "oxygen rich" and "oxygen reduced" are relative to the mass or volume composition of flue gas(es) entering oxygen separator 128 form flue gas 124, or from other components of power plant 120 fluidly coupled to oxygen separator 128. Furthermore, oxygen rich stream(s) exiting oxygen separator 128 will have a larger percentage of oxygen by mass or volume than oxygen reduced stream(s) exiting the same oxygen separator 128. For any oxygen separator 128 in power plant 120, the oxygen rich stream(s) will include a majority (i.e., fifty percent or more) of the total oxygen in flue gas(es) entering oxygen separator 128, whereas the oxygen reduced stream(s) Will include a minority (i.e., less than fifty percent) of the total oxygen entering oxygen separator 128. Where multiple oxygen separators 128 are coupled to power plant 120, it is understood that each of the various oxygen separators 128 may produce oxygen rich streams and oxygen reduced stream with significantly different oxygen concentrations from each other.

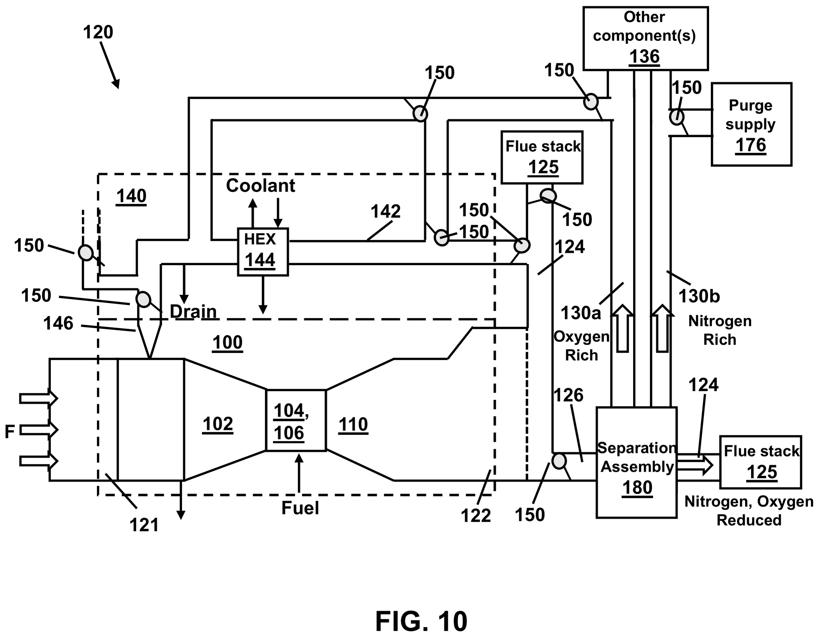

The oxygen reduced stream(s) exiting from oxygen separator 128 may pass to a post-combustion carbon capture system ("CCS") 134, e.g., through a conduit 132, where carbon dioxide can be removed from the oxygen reduced stream according to any of several carbon capture technologies. According to an example, CCS 134 may be an amine-based carbon capture system for removing carbon dioxide from flue gas. Examples of amine-based carbon capture systems include, e.g., various systems using solvents such as diethanolamine (DEA), methyldiethanolamine (MDEA), diglycolamine (DGA), piperazine (PZ) based systems, where cells coated with any desirable solvent react with flue gas(es) flowing thereacross to remove carbon dioxide and trap it within the solvent(s). Amine-based carbon capture system architectures may be prone to degradation and/or impairment of chemically active components (e.g., the amine solvent(s) for capturing carbon dioxide) due to unintended chemical reactivity with oxygen within the gas(es) passing therethrough. Embodiments of power plant 120 thus may provide multiple technical benefits, e.g., removing oxygen from flue gas(es) extracted from flue conduit 124 to prevent relatively high oxygen concentrations from interfering with the function of CCS 134, and as discussed herein, using the resulting supply of separated oxygen to provide technical benefits elsewhere in power plant 120 and/or GT engine 100. In some implementations, e.g., FIG. 10 and related embodiments discussed herein, CCS 134 may be omitted entirely.

Flue conduit 124 also may be fluidly coupled to EGR system 140 of power plant 120, fluidly coupled to GT engine 100. EGR system 140 includes an EGR conduit 142 coupled to flue conduit 124 upstream of flue stack 125 such that a desired amount of flue gas enters EGR conduit 142 of EGR system 140 without passing into flue stack 125. EGR system 140 may be configured to enable extraction, cooling, and recirculation of un-combusted nitrogen oxide (NOₓ) emissions in the flue gas by recirculating the flue gas from flue conduit 124 in GT engine 100. EGR conduit 142 may pass through an exhaust gas heat exchanger ("HEX") 144 for thermal interaction with one or more coolants (e.g., ambient air and/or dedicated fluid supplies external to GT engine 100). Coolant in HEX 144 may absorb thermal energy from (but does not physically mix with) the flue gases in EGR conduit 142 to reduce the flue gas temperature. The flue gas in EGR system 140 then can pass through an EGR inlet 146 to return to inlet 121 where it intermixes with incoming air to be combusted in GT engine 100. Other pathways within EGR system 140 may transmit the cooled flue gas to other components (including, for instance, other GT engines not shown) as desired and/or where applicable.

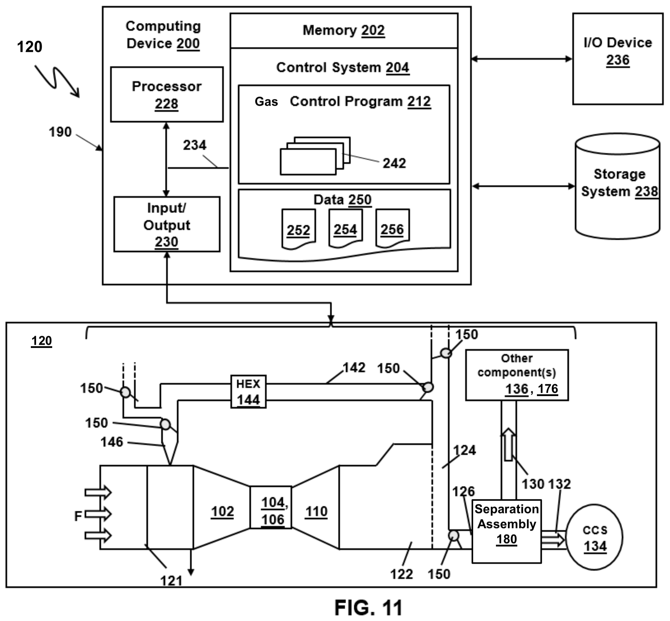

The flow of flue gas(es) through power plant 120 may be controlled actively or passively with a set of valves 150 (e.g. dampers and/or various other devices for controlling fluid flow). Valves 150 may have passive control in the case where fluid flows, pressures, temperatures, etc., above a structurally-determined threshold causing valve(s) 150 to close automatically until the conditions near valve(s) 150 return to below the threshold. In other implementations, a controller 190 (FIG. 11) may be coupled to one or more valve(s) 150 to enable active control of one or more valves 150 based on multiple physical parameter(s) and/or logic defined within certain control systems.

Any one or more of valves 150 may have an open extent thereof adjustable between completely open, completely closed, and a number of partially open/closed positions to control how much of the flue gas will be provided to a corresponding section or component of power plant 120. Valve(s) 150, where applicable, may be coupled to a controller 190 (see FIG. 11, e.g., via electro-mechanical converter(s) (not shown)) operable to adjust valve(s) 150 to control the amount of flue gas(es) transmitted to components within power plant 120.

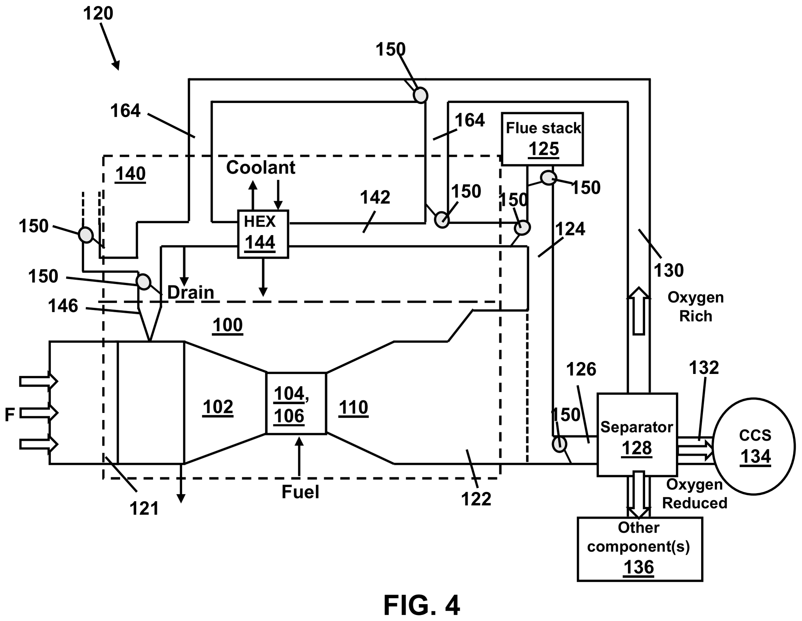

Turning now to FIG. 4, embodiments of power plant 120 may be configured for oxygen separator 128 to transmit an oxygen rich stream to EGR system 140, in which case EGR system 140 functions as one of other component(s) 136 discussed herein. In this case, separated gas conduit 130 provides separated oxygen to a portion of EGR conduit 142 via one or more oxygen mixing conduits 164. Oxygen mixing conduit(s) 164 may be fluidly coupled to EGR conduit 142 upstream from HEX 144, and/or downstream from HEX 144. Two mixing conduits 164 are shown in FIG. 4, but power plant 120 may include only one oxygen mixing conduit 164 or more than two oxygen mixing conduits 164 in further implementations. Where desired, one or more oxygen mixing conduits 164 may include valve 150 therein to control the proportion of oxygen flow provided to different parts of EGR conduit 142.

Where EGR conduit includes multiple oxygen mixing conduits 164, one or more oxygen mixing conduits 164 may be located upstream from HEX 144 and other mixing conduits 164 may be located downstream from HEX 144. In this case, valves 150 can control the flow of oxygen rich stream(s) from oxygen separator 128 to different portions of EGR conduit 142 to affect the temperature of flue gases recirculated to inlet 121 through EGR system 140. Oxygen separator 128 thus may be fluidly coupled to EGR system 140 and may transmit its outgoing oxygen rich stream(s) thereto. The transmitting of oxygen rich stream(s) to EGR system 140 can allow an operator to control the composition, temperature, and flow rate of recirculated flue gases introduced to inlet 121 through EGR inlet 146. Oxygen separator 128 also may be fluidly coupled to other component(s) 136 other than EGR system 140 through other pathways, e.g., connected in parallel with EGR conduits 164 from oxygen separator 128.

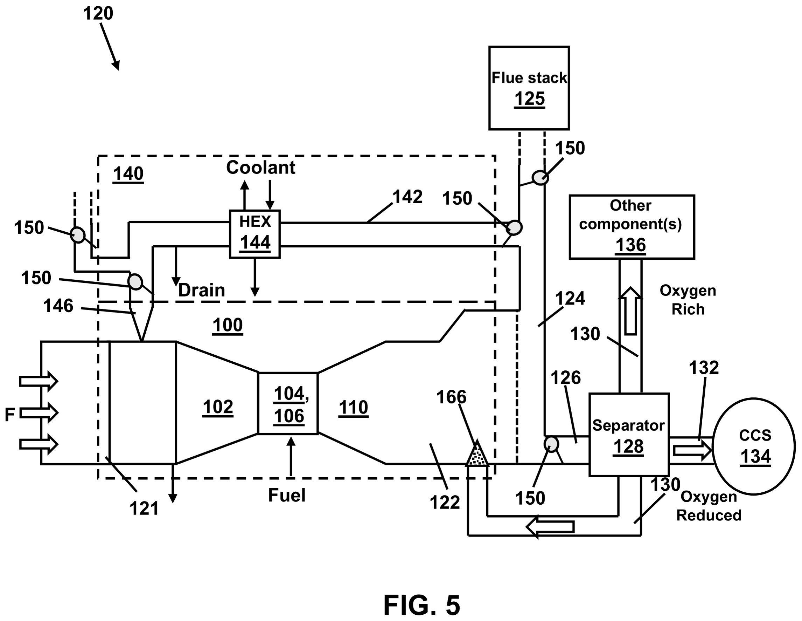

FIG. 5 depicts a further implementation of power plant 120 where oxygen separator 128 transmits an oxygen rich stream to HRSG 122. It is emphasized that the features in FIGS. 4 and 5, as well as other configurations herein, are shown separately merely for clarity of illustration and that any and all implementations of power plant 120 can be combined where desired. Oxygen separator 128 may include multiple separated gas conduits 130 for transmitting oxygen rich streams from oxygen separator 128. One separated gas conduit 130 may be coupled to other components 136 (including, e.g., EGR system 140 according to the configurations shown in FIG. 4). Another separated gas conduit 130 may be coupled to a duct burner 166 of HRSG 122. Duct burner 166 may be an assembly for controlled ignition of oxygen from oxygen separator 128 (and/or other fuels) to increase the heat energy of flue gases entering HRSG 122. In this configuration, oxygen is separated from the flue gas to be repurposed for combustion in duct burner 166 before it enters (and potentially degrades) CCS 134. Such re-use of the flue gas in flue conduit 124 is otherwise not achievable without separating oxygen content from the flue gases using oxygen separator 128 to create oxygen rich streams for transmission to HRSG 122.

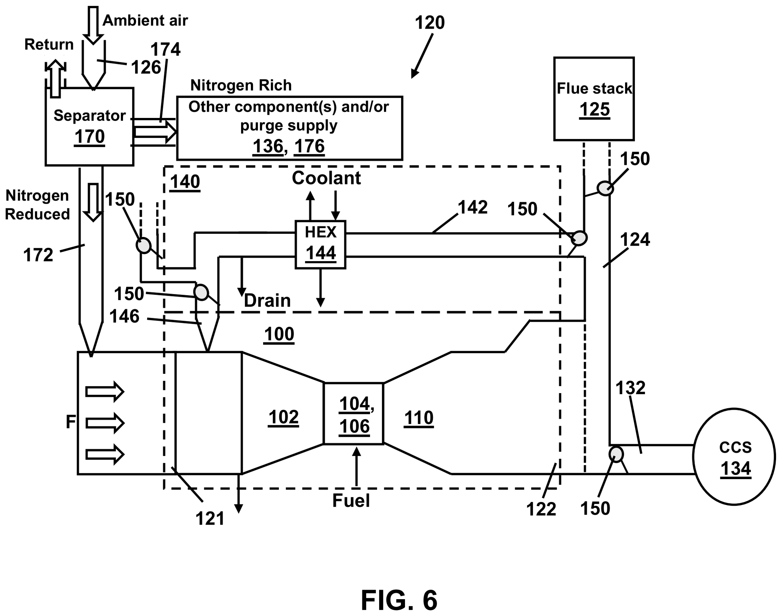

Turning to FIG. 6, power plant 120 additionally, or alternatively, may include components for separating nitrogen from certain gases, as an alternative and/or addition to the oxygen separation features discussed herein. Here, power plant 120 includes separator inlet 126 coupled to an ambient environment for extracting an ambient air. Separator inlet 126 transmits the extracted ambient air to a nitrogen separator 170 to separate the incoming ambient air from separator inlet 126 into a nitrogen rich stream and a nitrogen reduced stream. The nitrogen reduced stream may be transmitted to inlet 121 through an inlet conduit 172 to be intermixed with fluid(s) F provided to GT engine 100.

The term "nitrogen rich stream," as used herein, refers to any stream exiting nitrogen separator 170 having a greater percent mass or volume composition of nitrogen than the stream(s) (e.g., ambient air) entering nitrogen separator 170. For instance, where ambient air entering nitrogen separator 170 is approximately seventy-eight percent nitrogen, the nitrogen rich stream leaving nitrogen separator 170 may have more than an seventy-eight percent mass or volume composition of nitrogen. The percentage of nitrogen in a nitrogen rich stream may be substantially greater than that of the ambient air outside power plant 120, e.g., it may be at least approximately ninety percent nitrogen by mass or volume. The term "nitrogen reduced stream." As used herein, refers to any stream exiting nitrogen separator 170 having a lower percent mass or volume composition of nitrogen than the stream(s) entering nitrogen separator 170. In the previous example where ambient air is approximately seventy-eight percent nitrogen by mass or by volume, a nitrogen reduced stream leaving nitrogen separator 170 may have a mass or volume concentration of nitrogen below seventy-eight percent.

The terms "nitrogen rich" and "nitrogen reduced" are relative to the mass or volume composition of ambient air entering nitrogen separator 170 and/or other input gases transmitted to nitrogen separator 170 or from other components of power plant 120. Furthermore, nitrogen rich stream(s) exiting nitrogen separator 170 will have a larger percentage of nitrogen by mass or volume than nitrogen reduced stream(s) exiting the same nitrogen separator 170. For any nitrogen separator 170 in power plant 120, the nitrogen rich stream(s) will include a majority (i.e., fifty percent or more) of the total nitrogen in flue gas(es) entering nitrogen separator 170, whereas the nitrogen reduced stream(s) Will include a minority (i.e., less than fifty percent) of the total nitrogen entering nitrogen separator 170. Where multiple nitrogen separators 170 are coupled to power plant 120, it is understood that each of the various nitrogen separators 170 may produce nitrogen rich streams and nitrogen reduced stream with significantly different nitrogen concentrations from each other.

The nitrogen rich stream ("Return" path in FIG. 6), or in some cases, optionally may be provided to other component(s) 136 to aid in various functions discussed herein. Nitrogen separator 170 may include, for example, any currently known or later developed membrane-based nitrogen separation tool(s) reliant upon polymer fibers and/or similar selectively permeable materials. Nitrogen separator 170 alternatively may include cryogenic-based nitrogen separation systems for separating nitrogen from remaining air by cooling of gas(es) passing therethrough.

Other component(s) 136 may be any component of power plant 120, and/or a system coupled thereto, in need of nitrogen rich gas(es). Otherwise, the nitrogen rich stream(s) from nitrogen separator 170 simply may return to ambient. Without regard to intended destination, the nitrogen rich stream(s) from nitrogen separator 170 is/are transmitted only to destinations fluidly isolated from inlet 121 (e.g., areas of GT engine 100 where working fluids F do not pass), to desirably reduce the nitrogen content of incoming working fluids to GT engine 100. Thus, the nitrogen reduced stream(s) from nitrogen separator 170 may be supplied to inlet 121 as part of the working fluid for GT engine 100. It has been determined that, similar to oxygen rich flue gas(es) described herein, nitrogen rich flue gas(es) entering CCS 134 may interfere with (and perhaps degrade) the function of carbon capture components such as amine-based materials for removing carbon dioxide from a flue gas stream. Nitrogen separator 170, during operation, thus improves the operation of power plant 120 and protects CCS 134 from potential nitrogen-based degradation.

In embodiments of the disclosure, nitrogen separator 170 may reduce the percent composition by mass and/or volume of nitrogen in working fluid(s) supplied to GT engine 100 and thus may reduce the amount of nitrogen in the flue gas(es) yielded from turbine assembly 110 and/or HRSG 122. In the example configuration shown in FIG. 6, CCS 134 may be coupled directly to flue conduit 124 (e.g., by being mounted on the casing of GT engine 100 and/or optionally being fluidly coupled thereto through conduit 132) because nitrogen separator 170 is instead fluidly coupled to inlet 121 through inlet conduit 172. In other configurations discussed herein, nitrogen separator 170 may be located in alternative or additional locations within power plant 120 to perform similar functions.

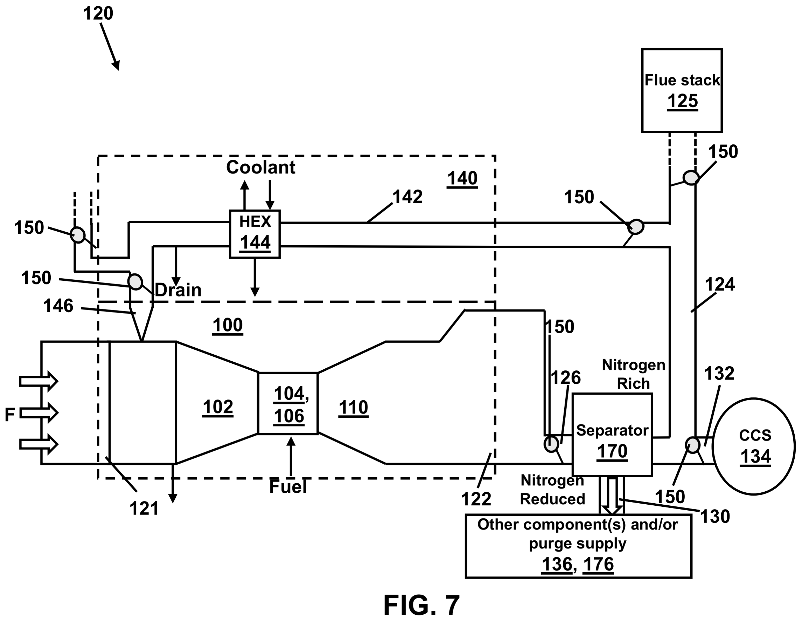

FIG. 7 depicts an example implementation of power plant 120 where nitrogen separator 170 is located fluidly between HRSG 122 and flue conduit 124. In this case, separator inlet 126 may be fluidly coupled to the exit of HRSG 122 to transmit the flue gas(es) through nitrogen separator 170. Separated gas conduit 130 can transmit a nitrogen rich stream exiting nitrogen separator 170 to other component(s) 136 as with other implementations described herein, whereas the nitrogen reduced stream(s) exiting from nitrogen separator 170 may pass into flue conduit 124. The nitrogen reduced stream(s) may enter CCS 134 directly from flue conduit 124 through conduit 132, as all flue gas(es) extracted from flue conduit 124 will have already passed through nitrogen separator 170. The flue gases entering CCS 134 and EGR system 140 from flue conduit 124 thus will have a lower nitrogen content than flue gases upstream from nitrogen separator 170.

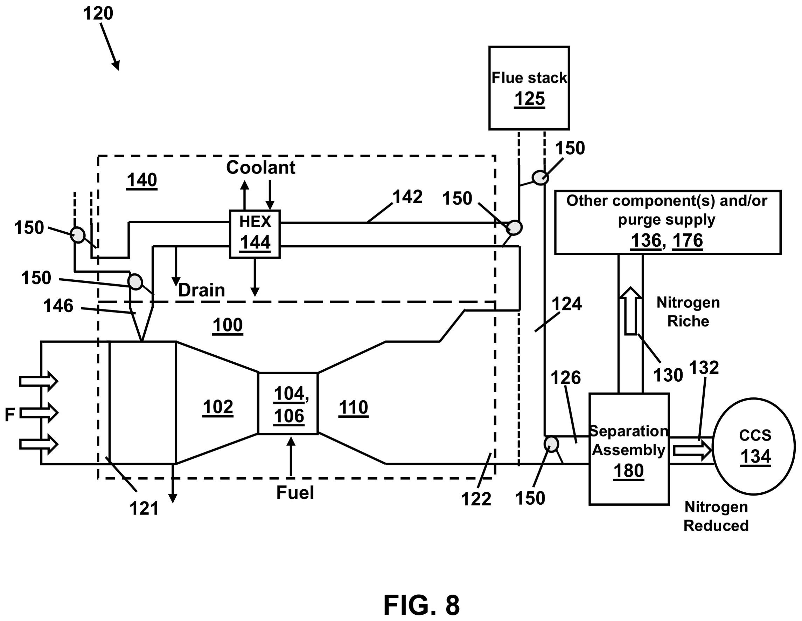

FIG. 8 depicts another embodiment of power plant 120 in which a separation assembly 180 integrates the functions of oxygen separator 128 and nitrogen separator 170 into an integrated component for separating nitrogen and oxygen from flue gas(es). Separation assembly 180, for example, may be a single volume of space having multiple nitrogen and oxygen separation tools (e.g., membrane-based gas separators discussed herein), each configured to separate nitrogen or oxygen from the flue gas(es) passing therethrough. Separator inlet 126, where applicable, thus may connect flue conduit 124 to separation assembly 180 where oxygen and nitrogen are separated from flue gas(es) before passing through conduit 132 to CCS 134. In other implementations discussed herein, separation assembly 180 may be mounted directly on GT engine 100. One or more separated gas conduits 130 may transmit oxygen rich and/or nitrogen rich streams from separation assembly 180 to other component(s) 136 of GT engine 100 (e.g., HRSG 122, EGR system 140, purge supply 176, etc., as described herein) for various technical purposes. Regardless of eventual destination, the oxygen rich stream in one separated gas conduit 130a may be fluidly isolated from the nitrogen rich stream in another separated gas conduit 130b.

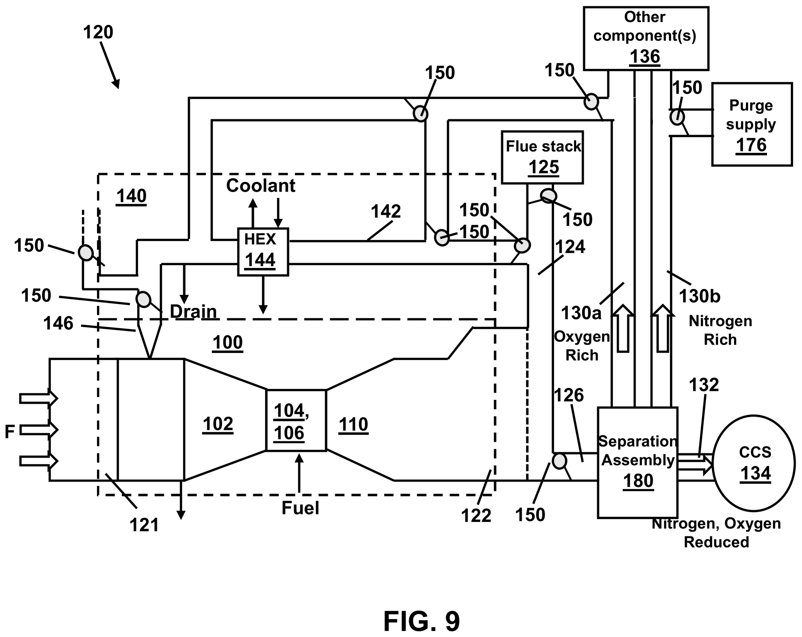

FIG. 9 depicts a further implementation of power plant 120 with separation assembly 180 and multiple separated gas conduits 130a, 130b, each configured to transmit a different stream, (e.g., an oxygen rich stream in separated gas conduit 130a, a nitrogen rich stream in separated gas conduit 130b) to other component(s) 136. Each second conduit also may be connected to certain components, systems, etc., that can benefit of the particular gas species being extracted. For example, EGR system 140 may benefit from separated oxygen but not separated nitrogen and thus may be fluidly coupled to separated gas conduit 130a for transmitting oxygen from separation assembly 180. Purge supply 176 may benefit from separated nitrogen but not separated oxygen and thus may be fluidly coupled to separated gas conduit 130b for transmitting nitrogen from separation assembly 180. Separation assembly 180 thus may be coupled to multiple separated gas conduits 130a, 130b, each configured to transmit oxygen rich streams or nitrogen rich streams to different sets of components. Each separated gas conduit 130a, 130b also may be connected to other component(s) 136 capable of using either of the oxygen rich or nitrogen rich streams.

Referring to FIG. 10, still further implementations of power plant 120, optionally, may omit CCS 134 (FIGS. 3-9) entirely. In this case, oxygen reduced and/or nitrogen reduced streams exiting separation assembly 180 may pass into another flue conduit 124 and then to flue stack 125 and/or an ambient environment. FIG. 10 demonstrates that separation assembly 180 may be implemented to benefit various components of power plant 120 and/or other components 136 by providing them with separated oxygen and nitrogen using separation assembly 180, even where the nitrogen reduced and/or oxygen reduced streams is/are not transmitted to CCS 134 or other flue gas treatment systems.

Referring to FIG. 11, a schematic depiction of a controller 190 and sub-components thereof is illustrated as part of power plant 120. In the FIG. 11 illustration, the operative couplings between controller 190 and various components of power plant 120 are shown only schematically for clarity of illustration. As shown, controller 190 may include a computing device 200, which may include a memory 202 with a control system 204 operating thereon. Control system 204 may include, e.g., a gas control program 212. Gas control program 212 may cause controller 190 to act on and/or adjust components of power plant(s) 120 and/or may modify an existing operational methodology of controller 190 for operating power plant(s) 120. Controller 190 as shown in FIG. 11 represents one type of hardware for interacting with and/or controlling power plant 120.

Controller 190 may interpret operational data from various conventional sensors (not shown, e.g., temperature data, flow rate data, compositional detectors, etc.) in power plant 120 and, in response to such data, may adjust valve(s) 150 to increase or decrease flows of flue gas, nitrogen rich streams, nitrogen rich streams, etc., into a desired part of power plant 120. Within controller 190, gas control program 212 may monitor and/or interact with, and in some cases override, other operations that controller 190 undertakes to control power plant 120. Control system 204 and gas control program 212 may be part of a primary control system for power plant 120 or may be separate and interact with a primary control system for power plant 120.

According to an example, controller 190 can monitor power plant 120 (e.g., via conventional sensor(s) discussed herein) during operation and may periodically or continuously evaluate whether to transmit flue gas(es), oxygen rich streams, nitrogen rich streams, etc., to other components 136 such as HRSG 122, EGR system 140, etc. Gas control program 212 may cause controller 190 to adjust any or all of valves 150 into a desired position, such as fully open, partially open, partially closed, or fully closed positions. Gas control program 212 may adjust valves to control the amount of separated gas(es) transmitted to other component(s) 136 and/or flue stack 125 (FIGS. 3-10).

Embodiments of the present disclosure may be configured or operated in part by a technician, computing device 200, and/or a combination of a technician and computing device 200. It is understood that some of the various components shown in FIG. 11 can be implemented independently, combined, and/or stored in memory for one or more separate computing devices that are included in computing device 200. Further, it is understood that some of the components and/or functionality may not be implemented, or additional schemas and/or functionality may be included as part of control system 204.

Computing device 200 can include a processor unit (PU) 228, an input/output (I/O) interface 230, and a bus 234. Further, computing device 200 is shown in communication with an external I/O device 236 and a storage system 238. Control system 204 may provide gas control program 212, which in turn can operate using various modules 242 (e.g., a calculator, a determinator, a comparator, etc.) for implementing various functions and/or logical steps. The various modules 242 can use algorithm-based calculations, look-up tables, and similar tools stored in memory 202 for processing, analyzing, and operating on data to perform their respective functions. In general, PU 228 can execute computer program code to run software, such as control system 204, which can be stored in memory 202 and/or storage system 238. While executing computer program code, PU 228 can read and/or write data to or from memory 202, storage system 238, and/or external I/O device 236. Bus 234 can provide a communications link between each of the components in computing device 200. I/O device 230 can comprise any device that enables a user to interact with computing device 200 or any device that enables computing device 200 to communicate with the equipment described herein and/or other computing devices. I/O devices 230, 236 (including but not limited to keyboards, displays, pointing devices, etc.) can be coupled to controller 190 either directly or through intervening I/O controllers (not shown).

Memory 202 can also include various forms of data 250 pertaining to various components of power plant 120, e.g., various forms of data and/or predetermined data which controller 190 may use as a reference to control the routing of flue gas(es), oxygen rich streams, nitrogen rich streams, etc., through power plant 120. Gas control program 212 can store and interact with data 250 subdivided into various fields. For example, operating parameter field 252 can store any and all types of data collected for power plant 120 (e.g., temperatures, pressures, flow rates, power output, operating efficiency, other parameters affecting power plant 120 and/or its outputs, including attributes of flue gas in flue conduit 124), which may characterize the status of power plant 120 as it operates. Where applicable, operating parameter field 252 may include information for classifying the operating status of power plant 120 (e.g., intended power output for loaded or standby modes, target component temperatures in these modes, etc.). Data 250 may additionally, or alternatively, include a valve position field 254 for relating the position of one or more valves 150, etc., to the amount of flue gas extracted from flue conduit 124, ambient air provided to inlet 121, flow rates of oxygen rich streams and/or nitrogen rich streams in separated gas conduit(s) 130, etc., when certain valves 150 are in certain positions.

Data 250 also may include one or more threshold values in a threshold field 256 for comparisons with other data. The thresholds may indicate whether too much or too little flue gas is being extracted from flue conduit 124, whether other component(s) 136 need additional or less separated oxygen and/or nitrogen, whether too much or too little ambient air is being mixed with incoming working fluid(s) at inlet 121, etc. According to an example, the threshold(s) may include threshold temperatures, flow rates, nitrogen compositions, oxygen compositions, etc., during operation in one or more components of power plant 120 (e.g., within compressor 102, combustor 104, turbine assembly 110, and/or HRSG 122).

Computing device 200 can comprise any general-purpose computing article of manufacture for executing computer program code installed by a user (e.g., a personal computer, server, handheld device, etc.). However, it is understood that computing device 200 is only representative of various possible equivalent computing devices and/or technicians that may perform the various process steps of the disclosure. In addition, computing device 200 can be part of a larger system architecture operable to model and/or control various aspects and elements of power plant 120.

To this extent, in other embodiments, computing device 200 can comprise any specific-purpose computing article of manufacture comprising hardware and/or computer program code for performing specific functions, any computing article of manufacture that comprises a combination of specific-purpose and general-purpose hardware/software, or the like. In each case, the program code and hardware can be created using standard programming and engineering techniques, respectively. In one embodiment, computing device 200 may include a program product stored on a computer readable storage device, which can be operative to automatically control other elements of power plant 120 (e.g., valve(s) 150) when executed. Computing device 200 may also take the form of, e.g., a remote monitoring system that is part of a central monitoring system, which in turn is responsible for controlling flow input fluids and/or flue gas(es) to or from multiple power plants 120. In this case, computing device 200 may represent a portion or subcomponent of a central control system.

Embodiments of the disclosure provide various technical and commercial advantages, examples of which are discussed herein. The disclosure may allow an operator of a power system and/or power plant(s) 120 to extend the lifespan of carbon capture subsystems (e.g., CCS 134 (FIGS. 3-10) by reducing or preventing chemical contamination and/or degradation from excessive amounts of oxygen or nitrogen in flue gas(es) and/or ambient air. Simultaneously, embodiments of power plant 120 enable oxygen and/or nitrogen gas(es) depleted from a flue gas stream to be repurposed for other components such as EGR system 140, HRSG 122, purge supply 176, etc. The optional use of a controller may enable methods of actively controlling the amount of flue gas(es) and/or ambient air passed through oxygen separator 128, nitrogen separator 170, and/or separation assembly(ies) 180 integrating oxygen and nitrogen separation, thus making efficient use of different gas species in emissions streams before they are routed to flue stack 125 and/or CCS 134. Among other benefits, embodiments of the disclosure may extend the useful life of CCS 134 as well as individual components within a power plant by preventing such components from experiencing unwanted chemical interaction between oxygen and nitrogen and certain sensitive materials (e.g., amine compounds included within CCS 134).

Embodiments of the apparatus and devices of the present disclosure are not limited to any one particular turbomachine, engine, turbine, jet engine, power generation system or other system, and may be used with other turbomachines such as aircraft systems, power generation systems and/or related systems (e.g., combined cycle, simple cycle, nuclear reactor, etc.). Additionally, the apparatus of the present disclosure may be used with other systems not described herein that may benefit from the increased efficiency of the apparatus and devices described herein.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" as applied to a particular value of a range applies to both end values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the appended claims. The embodiments were chosen and described in order to best explain the principles of the disclosure and the practical application and to enable others of ordinary skill in the art to understand the disclosure such that various modifications as are suited to the particular use may be contemplated.

## Claims

1. A system comprising:
an oxygen separator downstream from a gas turbine engine (100) and configured to receive a flue gas stream from the gas turbine engine, the oxygen separator (128) configured to separate the flue gas stream from the gas turbine engine into an oxygen rich stream and an oxygen reduced stream; and
a first conduit (130) coupled to the oxygen separator and configured to transmit the separated oxygen rich stream to a power plant component (136).

2. The system of claim 1, further comprising a carbon capture system (134) in fluid communication with the oxygen separator (128) and configured to receive the oxygen reduced stream therefrom.

3. The system of claim 2, wherein the carbon capture system includes an amine-based carbon capture system for removing carbon dioxide from the oxygen reduced stream.

4. The system of any preceding claim, wherein the power plant component (136) includes an exhaust gas recirculation system (140) fluidly coupled to the gas turbine engine (100).

5. The system of claim 4, wherein the first conduit (130) is configured to transmit the oxygen rich stream to the exhaust gas recirculation (140) system upstream from an exhaust gas heat exchanger (144) and downstream of an inlet port to the exhaust gas recirculation system.

6. The system of claim 4, wherein the first conduit (130) is configured to transmit the oxygen rich stream to the exhaust gas recirculation system (140) upstream from an output port from the an exhaust gas recirculation system and downstream from an exhaust gas heat exchanger (144).

7. The system of any preceding claim, wherein a heat recovery steam generator (122) is fluidly coupled to the gas turbine engine (100) and configured to receive a flue gas stream therefrom, wherein the HRSG transmits the flue gas stream to a flue-gas-stack (125).

8. The system of the preceding claim, wherein the heat recovery steam generator (122) comprises a duct burner (166) and the power plant component includes the duct burner of the heat recovery steam generator.

9. The system of claim 8, further comprising a second conduit (126) configured to direct the flue gas stream from the gas turbine engine (100) to the oxygen separator (128), wherein the second conduit is coupled downstream of the heat recovery steam generator (122) and upstream of the flue gas-stack (125).

10. A method comprising:
separating, in an oxygen separator (128), a flue gas stream from a gas turbine engine (100) into an oxygen rich stream and an oxygen reduced stream; and
transmitting the oxygen rich stream to a power plant component (136).

11. The method of claim 10, further comprising transmitting the oxygen reduced stream to carbon capture system (134) in fluid communication with the oxygen separator, wherein the carbon capture system includes an amine-based carbon capture system for removing carbon dioxide from the oxygen reduced stream.

12. The method of any of claims 10 or 11, wherein the power plant component (136) includes an exhaust gas recirculation system (140) fluidly coupled to the gas turbine engine and the method comprises transmitting the oxygen rich stream to the exhaust gas recirculation system.

13. The method of claim 12, wherein transmitting the oxygen rich stream to the exhaust gas recirculation system (140) includes, based on a temperature of the oxygen rich stream, transmitting the oxygen rich stream to a first position upstream from an exhaust gas heat exchanger (144) and downstream of an inlet port of the exhaust gas recirculation system, or to a second position upstream from an output port from the exhaust gas recirculation system and downstream from the exhaust gas heat exchanger of the exhaust gas recirculation system.

14. The method of any of claims 10 through 13, wherein the power plant component includes a duct burner (166) of a heat recovery steam generator operatively associated with the gas turbine engine and the method comprises transmitting the oxygen rich stream to the duct burner.

15. The system of any of claims 1 through 9, wherein the system is configured for performing any of the methods of any of claims 10 through 14.
